# FASCICULE DE BREVET EUROPEEN

(11) **EP 0 431 120 B1**
(45) Date de publication et mention de la délivrance du brevet: **20.04.1994**
(21) Numéro de dépôt: 90909442.7
(22) Date de dépôt: 07.06.1990
(51) Int. Cl.: G01N 1/02

(54) **APPAREILLAGE PORTATIF ET AUTONOME POUR L'ANALYSE IN SITU D'UNE SUBSTANCE LIQUIDE OU SOLIDE**
TRAGBARE, SELBSTÄNDIGE VORRICHTUNG ZUR IN-SITU-ANALYSE EINER FLÜSSIGEN ODER FESTEN SUBSTANZ
PORTABLE, SELF-CONTAINED EQUIPMENT FOR THE IN SITU ANALYSIS OF A LIQUID OR SOLID SUBSTANCE

(30) Priorité: 09.06.1989 FR 8907985
(43) Date de publication de la demande: 12.06.1991
(73) Titulaire: ETAT-FRANCAIS représenté par le DELEGUE GENERAL POUR L'ARMEMENT (DPAG), F-75996 Paris Armées (FR); PROENGIN S.A., 78210 Saint-Cyr-l'Ecole (FR)
(72) Inventeur: SUZANNE, Pierre, F-91490 Oncy-sur-Ecole (FR); BLEUSE, Patrick, F-59530 Le Quesnoy (FR); GUENE, Gilles, F-78990 Elancourt (FR); HEURTEL, Christian, F-91760 Vert-le-Petit (FR)
(74) Mandataire: de Saint-Palais, Arnaud Marie
(86) Numéro de dépôt international: FR9000399
(87) Numéro de publication internationale: WO9015318

(56) Documents cités:
- EP-A- 0 145 449
- FR-A- 2 595 470
- GB-A- 2 088 055
- US-A- 4 541 268
- US-A- 4 599 095

## Description

L'invention concerne un appareillage portatif et autonome pour l'analyse in situ d'une substance liquide ou solide pouvant notamment se présenter sous la forme de dépôts superficiels.

D'une manière générale, on sait que dans la panoplie des armes chimiques figurent des substances à très haute toxicité, destinées à être épandues (par exemple à partir d'une bombe) sous la forme de fines gouttelettes ou de fines particules relativement espacées les unes des autres, le simple contact de l'une de ces gouttelettes ou de ces particules avec la peau ou avec une muqueuse d'un individu pouvant être dangeureuse pour cet individu. Il en est de même pour certains contaminants d'origine industrielle.

Il importe donc de pouvoir détecter l'existence de zones contaminées et de déterminer rapidement la composition de la substance toxique, ainsi que la densité avec laquelle les gouttelettes ou les particules ont été épandues.

Or, il n'existe pas, à l'heure actuelle, d'appareil autonome portatif, de petites dimensions, qui permette d'obtenir instantanément, sur le site, l'ensemble de ces informations : la solution envisagée consistant à prélever des échantillons et à les transmettre ensuite à un laboratoire d'analyse. Une solution de ce genre, décrite dans le brevet US 4 541 268, fait intervenir une surface collectrice qui, après avoir absorbé la substance à analyser, est amenée au contact d'une membrane chauffée et balayée par un gaz porteur provenant de la tête d'entrée d'un appareil d'analyse.

Par contre, on réalise actuellement des appareils portatifs d'analyse de composition gazeuse permettant de détecter la présence et d'effectuer l'analyse de gaz polluants ou dangereux. Le brevet européen EP-A-145 449 propose notamment un dispositif de détection d'agent chimique en forme de gouttelettes, qui comprend un collecteur présentant une surface collectrice au travers de laquelle on fait circuler un courant d'air.

L'invention propose donc de pallier à la lacune précédemment évoquée en associant à un appareil portatif d'analyse de composition gazeuse, un dispositif permettant d'effectuer le prélèvement et la vaporisation de la substance à analyser, étant entendu que, dans ce cas, les vapeurs produites par le dispositif de prélèvement sont utilisées par l'appareil d'analyse en tant que composition gazeuse à analyser.

Le problème qui se pose alors a trait à la conception d'un dispositif de prélèvement permettant de prélever la substance à analyser puis de l'évaporer de manière à ce que la vapeur dégagée puisse être totalement aspirée par l'appareil d'analyse.

A ce problème se rajoute celui dû au fait que ces différentes opérations doivent être exécutées en évitant toute possibilité de contamination qui conduirait à fausser les analyses effectuées ultérieurement.

En vue de résoudre ces problèmes, l'invention propose un appareillage portatif et autonome pour l'analyse in situ d'une substance, cet appareil comprenant un dispositif d'analyse de composition gazeuse auquel est associé un dispositif permettant d'effectuer le prélèvement sur un support, puis la vaporisation de la substance prélevée par échauffement dudit support grâce à des moyens de chauffage incorporés audit support, le dispositif d'analyse comprenant des moyens d'aspiration connectés au volume interne d'une enceinte collectrice du dispositif de prélèvement pour aspirer les vapeurs produites par ledit échauffement et les utiliser en tant que composition gazeuse à analyser.

Selon l'invention, cet appareillage est caractérisé en ce que ledit support consiste en une languette souple recouverte d'une couche absorbante ou adhésive et portant une résistance électrique chauffante et en ce que ce support s'engage dans l'enceinte collectrice lors de la phase de vaporisation, tandis qu'il est disposé en dehors de cette enceinte lors de la phase de prélèvement.

Dans le cas où la substance à analyser est liquide ou gazeuse, la tête de prélèvement pourra comprendre une languette souple recouverte d'une couche absorbante, les susdits moyens de chauffage consistant alors en une résistance électrique chauffante portée par la languette. L'alimentation de cette résistance électrique pourra être assurée au moyen d'une source d'énergie électrique logée dans le susdit corps et commandée par un interrupteur actionné en fonction de la position relative de la tete de prélèvement et de l'enceinte.

Avantageusement, la susdite couche pourra être conçue de manière à absorber sélectivement et donc concentrer les produits que l'on souhaite mettre en évidence. Elle pourra, en particulier, comprendre un gel de silice déposé en surface et tenu par du silicone.

Par ailleurs, dans le but de déterminer la quantité totale d'un constituant du liquide prélevé, le dispositif selon l'invention peut comprendre des moyens d'intégration aptes à intégrer dans le temps les valeurs instantanées fournies par l'appareil d'analyse, ces moyens d'intégration étant initialisés lors de l'actionnement du susdit interrupteur commandant la mise en oeuvre des moyens de chauffage.

Un mode de réalisation de l'invention sera décrit ci-après avec référence aux dessins annexés dans lesquels :
La figure 1 est une représentation schématique illustrant le principe d'un appareillage selon l'invention plus particulièrement destiné à l'analyse de liquides toxiques ;
Les figures 2 et 3 sont deux vues en perspective schématique montrant un mode d'utilisation d'un dispositif de prélèvement et de vaporisation ;
La figure 4 est une coupe axiale du dispositif de prélèvement et de vaporisation représenté figures 2 et 3 ;
La figure 5 est une coupe schématique partielle d'une tête de prélèvement amovible utilisable dans l'appareil représenté figures 2 à 4 ;
La figure 6 est une coupe partielle d'une languette souple utilisable dans la tête de prélèvement représentée figure 5 ;
La figure 7 est une vue de côté d'une variante d'exécution du dispositif de prélèvement et de vaporisation selon l'invention, en position désassemblée ; et
La figure 8 est une coupe axiale partielle montrant le dispositif de la figure 7 en position assemblée.

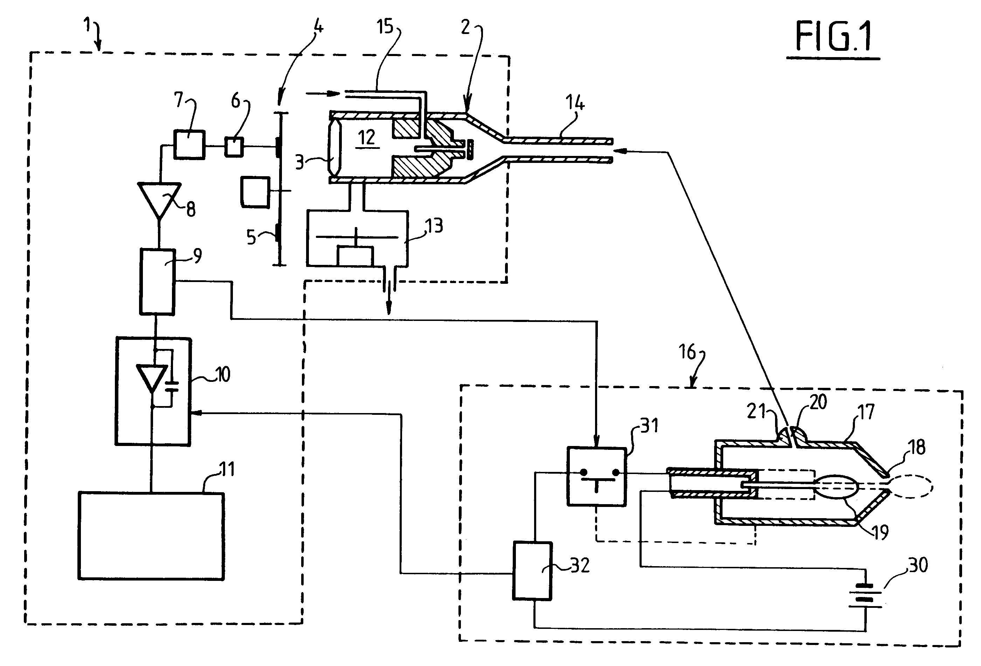

Dans l'exemple représenté sur la figure 1, l'appareillage pour l'analyse de liquides toxiques utilise un détecteur portatif et autonome l effectuant l'analyse en temps réel d'une composition gazeuse par spectrographie de flamme, par exemple de la façon qui est décrite dans le brevet FR No 87 02762 du 2 Mars 1987, au nom de PROENGIN.

Cet appareil 1 fait plus particulièrement intervenir un brûleur muni d'une fenêtre équipée d'une optique focalisatrice 3 dans l'axe de laquelle sont successivement disposés un hacheur rotatif 4 comportant une pluralité de filtres optiques 5, à raison de un par raie spectrale caractéristique de l'élément recherché, et une cellule optoélectronique 6 placée dans la zone de focalisation de l'optique 3.

Le signal électrique délivré par la cellule 6 est transmis à un circuit électronique de traitement comprenant successivement un ensemble de démodulation 7, un amplificateur 8, un détecteur de seuil 9, un intégrateur 10 et un dispositif d'affichage 11.

Le brûleur 2 comprend une chambre de combustion 12 maintenue en dépression grâce à une turbine 13. Elle est raccordée à l'extérieur par l'intermédiaire d'une buse d'aspiration 14, et à un circuit d'admission 15 d'un flux d'hydrogène à débit constant.

Le dispositif de prélèvement et de vaporisation associé à cet appareil d'analyse a été représenté schématiquement sur la figure 1 à l'intérieur du bloc 16. Il comprend, comme précédemment mentionné, une enceinte collectrice 17 ouverte d'un côté par une ouverture 18 et une tête de prélèvement 19 mobile relativement à cette enceinte 17 de manière à pouvoir occuper successivement une position de vaporisation (traits pleins) selon laquelle elle se trouve logée à l'intérieur de l'enceinte 17, et une position de prélèvement (en traits interrompus) dans laquelle elle s'étend au moins partiellement en dehors de l'enceinte 17 après être passée par l'ouverture 18. L'enceinte 17 comprend en outre un orifice 20 muni d'une tête de couplage 21 destinée à venir se connecter à la buse d'aspiration 14 de l'appareil d'analyse 1.

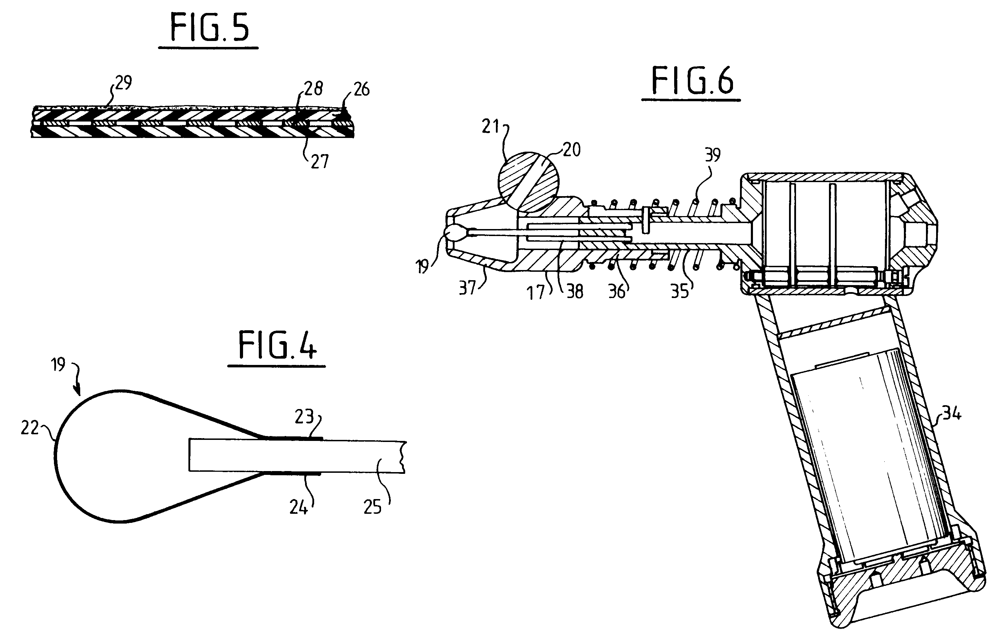

La tête de prélèvement 19 peut consister, comme représenté sur les figures 4 et 5, en une languette 22 formant une boucle et dont les deux extrémités 23, 24 sont respectivement fixées sur les deux faces d'une tige de support rigide 25.

Cette languette 22 présente une structure multicouches comportant deux couches 26, 27 en matière plastique, électriquement isolante, entre lesquelles est disposée une résistance chauffante électrique 28, et, disposée sur la face extérieure de la couche 24, une couche extérieure absorbante 29.

L'alimentation en énergie électrique de la résistance chauffante 28 est assurée au moyen d'une source d'alimentation en courant électrique 30 telle que, par exemple, une batterie de piles ou d'accumulateurs. Cette source est reliée à la résistance électrique 28 par l'intermédiaire d'un circuit électrique comprenant un interrupteur 31 dont la fermeture est commandée automatiquement par une liaison mécanique, lorsque la tête 19 est en position de vaporisation et dont l'ouverture est commandée par le détecteur de seuil 9 et/ou par des moyens de détection de position, lorsque la tête 19 est en position de prélèvement.

Ce circuit comprend en outre des moyens 32 permettant de détecter les passages en position fermée de l'interrupteur 31 et d'effectuer l'initialisation du circuit d'intégration 10 de l'appareil d'analyse 1.

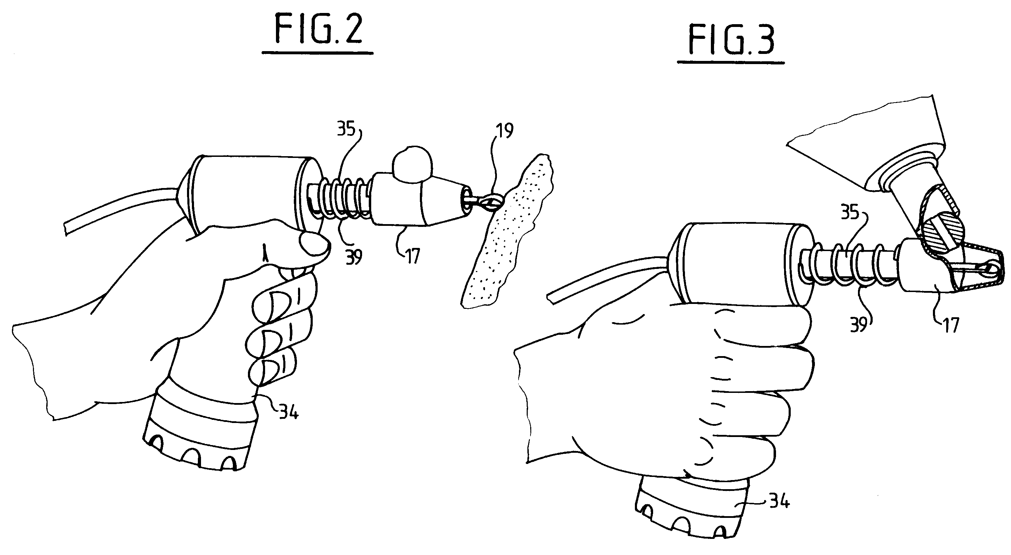

Du point de vue structural, le dispositif de prélèvement et de vaporisation peut comprendre, comme représenté sur les figures 2, 3 et 6, un corps en forme de pistolet dont la poignée 34 sert de réceptacle à la source d'énergie électrique 30 et dont la partie correspondant au canon, consiste en un élément tubulaire 35 à l'extrémité duquel est montée axialement coulissante l'enceinte collectrice 17. Cette enceinte 17 présente une forme cylindrotronconique dont la partie cylindrique 36 coulisse sur l'élément tubulaire 35 et dont la partie tronconique 37, ouverte au niveau de la face tronquée, sert à recevoir la tête de prélèvement 19.

Dans cet exemple, la tête de prélèvement 19 est de type jetable après usage et vient se monter sur l'extrémité de l'élément tubulaire 35 grâce à une pince élastique 38 qui assure en outre sa connexion électrique avec le circuit d'alimentation.

A l'état de repos, l'enceinte collectrice 17 est en position rétractée (la tête 19 étant en position de prélèvement). Elle peut être amenée en position déployée (qui correspond à la position de vaporisation de la tête) contre l'action d'un ressort de traction 39.

L'accouplement de l'enceinte 17 à la buse d'aspiration 14 de l'appareil d'analyse s'effectue ici grâce à une tête d'accouplement 21 sensiblement sphérique percée d'un canal 20 communiquant avec le volume intérieur de l'enceinte 17.

Le fonctionnement de l'appareillage précédemment décrit est alors le suivant.

Pour effectuer un prélèvement, l'opérateur tient la poignée du dispositif de prélèvement comme représenté sur la figure 2, l'enceinte 17 au repos étant rétractée et laissant dépasser la tête de prélèvement 19.

Le prélèvement d'une goutte s'opère ensuite en amenant la tête de prélèvement 19 au contact de la goutte de manière à ce que le liquide toxique soit absorbé par la couche absorbante.

L'opérateur procède ensuite à l'accouplement de la buse d'aspiration de l'appareil d'analyse en effectuant une poussée axiale sur l'enceinte 17 de manière à la placer en position déployée.

Dans cette position, l'enceinte agit sur l'interrupteur pour provoquer la fermeture du circuit d'alimentation de la résistance chauffante. Parallèlement, le détecteur transmet à l'intégrateur un signal d'initialisation.

La résistance chauffante provoque l'évaporation du liquide absorbé par la couche. Le mélange d'air et de vapeur contenu dans l'enceinte 17 est aspiré par l'action de la turbine 13 et passe successivement dans la buse 14 et dans la chambre de combustion 12 du brûleur. La flamme obtenue par combustion du mélange gazeux dans le courant d'hydrogène engendre un rayonnement lumineux qui, pour chaque spectre de fréquence correspondant aux éléments recherchés, donne lieu à la sortie du détecteur 6 à un signal d'intensité variable dont l'intégration permet de déterminer la quantité totale d'éléments recherchés présente dans la tête 19.

Le détecteur de seuil est conçu de manière à émettre un signal indiquant une absence d'élément recherché, soit que le liquide prélevé n'en contient pas, soit que le liquide prélevé s'est complètement évaporé. Dans ce cas, le détecteur de seuil sert à commander l'ouverture de l'interrupteur et l'arrêt de l'intégration en cours.

Ainsi, notamment, la tête de prélèvement pourrait comprendre une multiplicité de languettes disposées côte à côte sur une longueur relativement importante, de manière à pouvoir effectuer le balayage d'une zone de surface connue. Dans ce cas, le résultat fourni par l'intégrateur pourra être utilisé pour déterminer la quantité de liquide toxique par unité de surface.

L'enceinte collectrice associée à une telle tête de prélèvement pourra alors être réalisée en deux parties articulées l'une par rapport à l'autre de manière à pouvoir s'ouvrir et permettre les prélèvements et se fermer pour permettre la collecte des vapeurs du liquide prélevé par la tête.

En outre, dans le cas où la substance à analyser se présente sous la forme de particules solides, la couche absorbante revêtant la tête de prélèvement pourra être remplacée par une couche adhésive sur laquelle les particules pourront venir se fixer. Dans ce cas le fonctionnement du dispositif de prélèvement demeure le même que celui précédemment décrit.

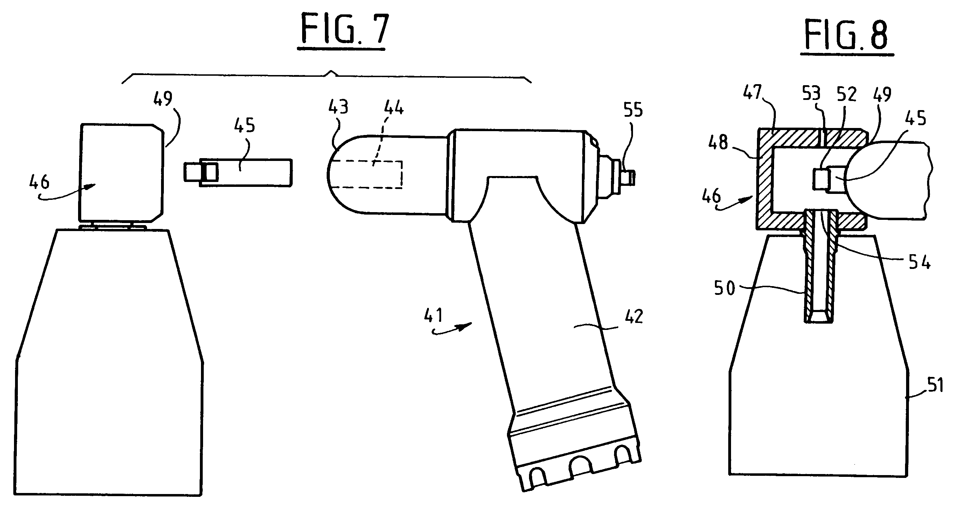

Dans l'exemple représenté sur les figures 7 et 8, le dispositif de prélèvement et de vaporisation est réalisé en deux parties distinctes, à savoir :
- un instrument de prélèvement 41, en forme de pistolet dont la poignée 42 sert de réceptacle à une source d'énergie électrique et dont la partie correspondant au canon est terminée par un embout hémisphérique 43, muni d'un réceptacle axial 44 dans lequel peut s'engager et se connecter électriquement une tête de prélèvement amovible 45 du type de celle précédemment décrite, et
- un collecteur de vapeur 46 se présentant sensiblement sous la forme d'une pipe comprenant un corps tubulaire 47 qui délimite un volume sensiblement cylindrique fermé, d'un côté, par un fond 48 et ouvert, de l'autre côté, par une ouverture circulaire 49 et un manchon de raccordement tubulaire 50 dont le volume interne communique avec le volume intérieur du corps 47 et qui s'étend radialement en saillie par rapport à ce dernier.

Le manchon de raccordement 50 est conçu de manière à pouvoir se raccorder à la buse d'aspiration de l'appareil d'analyse 51.

Le corps tubulaire 47 est conçu, quant à lui, de manière à pouvoir s'appliquer sur l'embout hémisphérique 43 de l'instrument de prélèvement 41 de manière à ce que l'ouverture 49 soit obturée de façon pratiquement étanche et que la boucle 52 formée par la tête de prélèvement soit disposée coaxialement au manchon de raccordement 50.

Par ailleurs, le corps 47 présente un orifice d'admission d'air 53 situé en un emplacement de la paroi cylindrique du corps 47, opposé à l'orifice d'aspiration 54 par lequel débouche le manchon de raccordement 50.

A l'aide du dispositif précédemment décrit, le prélèvement s'effectue au moyen de l'instrument de prélèvement 41 muni de sa tête de prélèvement amovible 45.

Une fois le prélèvement effectué, on procède à l'accouplement de l'instrument 41 sur le collecteur de vapeur 46 (embout hémisphérique 43 contre rebord de l'ouverture 49) de manière à ce que la tête de prélèvemènt 45 soit disposée de la manière précédemment indiquée.

On provoque ensuite la vaporisation du produit absorbé par la tête de prélèvement 45 par application d'un courant électrique sur la résistance chauffante incorporée à cette tête, par exemple en exerçant une pression sur un poussoir d'actionnement 55 d'un interrupteur.

La vapeur ainsi dégagée est aspirée par l'appareil d'analyse 51 grâce au manchon de raccordement 50. Grâce aux dispositions précédemment décrites, lors de cette phase d'aspiration, la tête de prélèvement 45 est balayée par un flux d'air sensiblement coaxial sans qu'il se forme de turbulence : on évite ainsi que la vapeur ainsi produite ne vienne contaminer les parois du collecteur de vapeur 46.

Avantageusement, l'instrument de prélèvement sera équipé d'un dispositif d'éjection automatique de la tête de prélèvement, ce dispositif étant conçu de manière à éviter toute possibilité de contamination de l'opérateur par une tête de prélèvement usagée.

## Revendications

1. Appareillage portatif et autonome pour l'analyse in situ d'une substance, cet appareil comprenant un dispositif d'analyse de composition gazeuse (1) auquel est associé un dispositif (16) permettant d'effectuer le prélèvement sur un support (22, 25), puis la vaporisation de la substance prélevée par échauffement dudit support grâce à des moyens de chauffage (28) incorporés audit support (22, 25), le dispositif d'analyse (1) comprenant des moyens d'aspiration (13) connectés au volume interne d'une enceinte collectrice (17 ; 47-48) du dispositif de prélèvement (16) pour aspirer les vapeurs produites par ledit échauffement et les utiliser en tant que composition gazeuse à analyser,
caractérisé en ce que ledit support (22, 25) consiste en une languette souple (22) recouverte d'une couche absorbante (29) ou adhésive et portant une résistance électrique chauffante (28) et en ce que ce support (22, 25) s'engage dans l'enceinte collectrice (17 ; 47-48) lors de la phase de vaporisation, tandis qu'il est disposé en dehors de cette enceinte (17 ; 47-48) lors de la phase de prélèvement.

2. Appareillage selon la revendication 1,
caractérisé en ce que le dispositif de prélèvement (16) comprend un corps (35, 36) sur lequel sont montés :
- une enceinte collectrice (17) comportant une ouverture (18) débouchant à l'air libre et un orifice d'aspiration (20) pouvant se connecter au circuit d'aspiration (14) de l'appareil d'analyse (1),
- une tête de prélèvement amovible (19), mobile relativement à l'enceinte collectrice (17) pour occuper successivement une position de prélèvement dans laquelle elle s'étend en dehors de l'enceinte collectrice (17) et une position de vaporisation selon laquelle elle se trouve logée à l'intérieur de l'enceinte collectrice (17), et
- des moyens de chauffage (28) pour chauffer la tête de prélèvement (19) lorsqu'elle se trouve en position de vaporisation.

3. Appareillage selon la revendication 1,
caractérisé en ce que la susdite couche absorbante (29) comprend des moyens pour absorber sélectivement les produits que l'on souhaite mettre en évidence.

4. Appareillage selon la revendication 3,
caractérisé en ce que la susdite couche (29) comprend un gel de silice déposé en surface et tenu par du silicone.

5. Appareillage selon la revendication 1,
caractérisé en ce que la languette (22) présente une structure multicouches comportant deux couches (26, 27) en matière plastique électriquement isolante, entre lesquelles est disposée une résistance chauffante électrique (28), et, disposé sur la face extérieure de l'une de ces deux couches, un revêtement absorbant (29) ou adhésif.

6. Appareillage selon la revendication 1,
caractérisé en ce que la languette (22) forme une boucle dont les deux extrémités (23, 24) sont respectivement fixées sur les deux faces d'une tige de support rigide (25).

7. Appareillage selon la revendication 6,
caractérisé en ce que ladite tige (25) est montée amovible sur un élément (35) solidaire du corps (35, 36) du dispositif de prélèvement grâce à des moyens de connexion mécaniques (38) associés à des moyens de connexion électriques.

8. Appareillage selon la revendication 1,
caractérisé en ce que le dispositif d'analyse (1) comprend des moyens (6) permettant de produire un signal électrique dont l'intensité est représentative de la quantité instantanée d'éléments recherchés contenue dans le courant gazeux en cours d'analyse, et des moyens (10) d'intégration dudit signal dont l'initialisation est commandée depuis l'appareil de prélèvement (16) lorsque la tête de prélèvement (19) passe en position de vaporisation, ces moyens d'intégration (10) permettant de déterminer la quantité totale d'éléments recherchés contenue dans la substance prélevée par la tête de prélèvement (19).

9. Appareillage selon la revendication 1,
caractérisé en ce que la tête de prélèvement (19) comprend une multiplicité de languettes (22) disposées côte à côte pour effectuer le balayage d'une zone de surface connue, l'intégrateur utilisé dans le dispositif d'analyse comprenant des moyens pour délivrer une information relative à la quantité de substance par unité de surface de la zone contaminée.

10. Appareillage selon la revendication 9,
caractérisé en ce que l'enceinte collectrice (17) est réalisée en au moins deux parties articulées l'une à l'autre.

11. Appareillage selon la revendication 1,
caractérisé en ce qu'il comprend deux parties distinctes, à savoir : un instrument à main de prélèvement (41) comportant un embout (43) muni d'un réceptacle (44) dans lequel peut s'engager et se connecter électriquement un support (45) présentant une résistance chauffante incorporée, et un collecteur de vapeur (46) pouvant se raccorder à un dispositif d'analyse (51), ce collecteur de vapeur (46) comprenant un corps tubulaire (47) délimitant un volume fermé, d'un côté, par un fond (48) et ouvert, de l'autre côté, par une ouverture (49) sur laquelle l'embout (43) de l'instrument de prélèvement (41) peut venir s'appliquer.

12. Appareillage selon la revendication 11,
caractérisé en ce que ledit support comprend une languette (22) formant une boucle, et en ce que le corps (47) du collecteur de vapeur (46) comprend un orifice d'aspiration (54) relié au dispositif d'analyse grâce à un manchon de raccordement et un orifice d'admission d'air (53) situé à l'opposé de l'orifice d'aspiration (54), ces deux orifices (53 et 54) étant disposés dans l'axe de la susdite boucle lorsque ledit embout (43) est appliqué sur l'ouverture (49) du corps (47) dudit collecteur.

## Claims

1. Portable and self-contained apparatus for analyzing a substance in situ, this apparatus comprising a gas composition analysis device (1) with which is associated a device (16) for taking the sample on a support (22, 25), then vaporizing the substance taken by heating said support, using heating means (28) incorporated in said support (22, 25), the analysis device (1) comprising suction means (13) connected to the inner volume of a collecting enclosure (17 ; 47-48) of the sample taking device (16) so as to suck in the vapours produced by said heating and to use them as gas composition to be analyzed,
characterized in that said support (22, 25) consists of a flexible tongue (22) covered with an absorbent or adhesive layer (29) and carrying an electric heating resistance (28), and in that said support (22, 25) engages into the collecting enclosure (17 ; 47-48) during the vaporization phase, whereas it is disposed outside said enclosure (17 ; 47-48) during the sample taking phase.

2. Apparatus according to claim 1,
characterized in that the sample taking device (16) comprises a body (35, 36) on which are mounted :
- a collecting enclosure (17) comprising an opening (18) open to the free air and a suction orifice (20) which can be connected to the suction circuit (14) of the analysis apparatus (1),
- a removable sample taking head (19) movable relatively to the collecting enclosure (17) so as to be able to occupy successively a sample taking position in which it extends outside the collecting enclosure (17) and a vaporization position in which it is housed inside the collecting enclosure (17), and
- heating means (28) designed so as to heat the sample taking head (19) when it is in the vaporization position.

3. Apparatus according to claim 1,,
characterized in that said absorbent layer (29) comprises means for selectively absorbing the products it is desired to reveal.

4. Apparatus according to claim 3,
characterized in that said layer (29) comprises a silica gel deposited on the surface and held by silicon.

5. Apparatus according to claim 1,
characterized in that the tongue (22) has a multi-layer structure with two layers (26, 27) made from an electrically insulating plastic material, between which is disposed an electric heating resistance (28) and, disposed on the external surface of one of these two layers, an absorbent or adhesive coating (29).

6. Apparatus according to claim 1,
characterized in that the tongue (22) forms a loop, both ends (23, 24) of which are fixed respectively to the two faces of a rigid support rod (25).

7. Apparatus according to claim 6,
characterized in that said rod (25) is removably mounted on an element (35) fast with the body (35, 36) of the sample taking device by mechanical connection means (38) associated with electric connection means.

8. Apparatus according to claim 1,
characterized in that the analysis apparatus (1) comprises means (6) for producing an electric signal whose intensity is representative of the instantaneous amount of elements sought contained in the gas stream being analyzed, and means (10) for integrating said signal whose initialization is controlled from the sample taking apparatus (16) when the sample taking head (19) passes to the vaporization position, these integration means (10) determining the total amount of elements sought contained in the substance sampled by the sample taking head (19).

9. Apparatus according to claim 1,
characterized in that the sample taking head (19) comprises a multiplicity of tongues (22) disposed side by side so as to be able to sweep a zone of known area, the integrator used in the analysis device comprising means for delivering information relative to the amount of substance per area unit of the contaminated zone.

10. Apparatus according to claim 9,
characterized in that the collecting enclosure (17) is made of at least two parts hinged together.

11. Apparatus according to claim 1,
characterized in that it comprises two separate parts, namely : a hand-operated sample-taking instrument (41) comprising an end-piece (43) with a receptacle (44) in which may be engaged and electrically connected a support (45) having an incorporated heating resistance, and a vapour collector (46) connectable to an analysis device (51), this vapour collector (46) comprising a tubular body (47) defining a volume closed, on one side, by a bottom (48) and open, on the other side, through an opening (49) on which the end-piece (43) of the sample taking instrument (41) may be applied.

12. Apparatus according to claim 11,
characterized in that said support comprises a tongue (22) forming a loop, and in that the body (47) of the vapour collector (46) comprises a suction orifice (54) connected to the analysis device through a connecting sleeve and an air intake orifice (53) situated opposite the suction orifice (54), these two orifices (53 and 54) being disposed in the axis of said loop when said end-piece (43) is applied to the opening (49) of the body (47) of said collector.

## Patentansprüche

1. Tragbare und autonome Apparatur zur in-situ Analyse einer Substanz, wobei diese Apparatur eine Vorrichtung (1) zur Analyse einer gasförmigen Zusammensetzung aufweist, der eine Vorrichtung (16) zugeordnet ist, die die Entnahme einer Substanz auf einen Träger (22, 25) und dann die Verdampfung der entnommenen Substanz durch Erhitzung dieses Trägers mithilfe von in diesen Träger (22, 25) eingebauten Heizmitteln (28) ermöglicht, wobei die Analysevorrichtung (1) eine mit dem Innenvolumen eines Sammelbehälters (17 ; 47-48) der Entnahmevorrichtung (16) verbundene Ansaugvorrichtung (13) aufweist, um die durch diese Erhitzung erzeugten Dämpfe anzusaugen und als zu analysierende gasförmige Zusammensetzung zu verwenden,
dadurch gekennzeichnet, dass besagter Träger (22, 25) aus einer biegsamen Zunge (22) besteht, die mit einer absorbierenden oder klebenden Schicht (29) bedeckt ist und einen elektrischen Heizwiderstand (28) trägt, und dass besagter Träger (22, 25) während der Verdampfungsphase in den Sammelbehälter (17 ; 47-48) eingeführt ist, und während der Entnahmephase ausserhalb dieses Behälters (17 ; 47-48) angeordnet ist.

2. Apparatur nach Anspruch 1,
dadurch gekennzeichnet, dass die Entnahmevorrichtung (16) einen Körper (35, 36) aufweist, auf dem angeordnet sind :
- ein Sammelbehälter (17) mit einer Öffnung (18), die in die Aussenluft mündet, und einer Ansaugöffnung (20), die mit dem Ansaugkreis (14) der Analysevorrichtung (1) verbunden werden kann,
- ein herausziehbarer Entnahmekopf (19), der in Bezug auf den Sammelbehälter (17) beweglich ist, sodass er nacheinander eine Entnahmestellung, in der er aus dem Sammelbehälter (17) herausragt, und eine Verdampfungsstellung einnehmen kann, in der er sich im Inneren des Sammelbehälters (17) befindet, und
- Heizmittel (28), um den Entnahmekopf (19) zu erhitzen, wenn er sich in der Verdampfungsstellung befindet.

3. Apparatur nach Anspruch 1,
dadurch gekennzeichnet, dass besagte absorbierende Schicht (29) Mittel aufweist, um selektiv die Produkte zu absorbieren, die man nachweisen will.

4. Apparatur nach Anspruch 3,
dadurch gekennzeichnet, dass diese Schicht (29) ein Kieselerdegel aufweist, das auf die Oberfläche aufgebracht ist und von Silikon gehalten wird.

5. Apparatur nach Anspruch 1,
dadurch gekennzeichnet, dass die Zunge (22) eine Vielschichtenstruktur hat, die zwei Schichten (26, 27) aus elektrisch insolierendem Kunststoffmaterial, zwischen denen ein elektrischer Heizwiderstand (28) angeordnet ist, und, auf der Aussenseite einer dieser beiden Schichten, einen absorbierenden oder klebenden Belag (29) aufweist.

6. Apparatur nach Anspruch 1,
dadurch gekennzeichnet, dass die Zunge (22) eine Schleife bildet, deren beide Enden (23, 24) je auf einer der beiden Seiten eines starren Trägerstabs (25) befestigt sind.

7. Apparatur nach Anspruch 6,
dadurch gekennzeichnet, dass der Stab (25) herausziehbar auf einem Element (35) angeordnet wird, das durch mechanische Verbindungsmittel (38), die elektrischen Schaltmitteln zugeordnet sind, fest mit dem Körper (35, 36) der Entnahmevorrichtung verbunden sind.

8. Apparatur nach Anspruch 1,
dadurch gekennzeichnet, dass die Analysevorrichtung (1) Mittel (6) aufweist, die es ermöglichen, ein elektrisches Signal zu erzeugen, dessen Stärke repräsentativ ist für die im gerade analysiert werdenden Gasstrom enthaltene augenblickliche Menge der gesuchten Elemente, und Mittel (10) zur Integrierung dieses Signals, deren Initialisierung von der Entnahmevorrichtung (16) gesteuert wird, wenn der Entnahmekopf (19) in die Verdampfungsstellung übergeht, wobei diese Integrationsmittel (10) es ermöglichen, die Gesamtmenge der in der durch den Entnahmekopf (19) entnommenen Substanz enthaltenen gesuchten Elemente zu bestimmen.

9. Apparatur nach Anspruch 1,
dadurch gekennzeichnet, dass der Entnahmekopf (19) eine Vielzahl von Zungen (22) aufweist, die nebeneinander angeordnet sind, um einen bekannten Oberflächenbereich überstreichen zu können und der in der Analysevorrichtung verwendete Integrator Mittel aufweist, um eine Information bezüglich der Substanzmenge pro Oberflächeneinheit des verunreinigten Bereichs zu liefern.

10. Apparatur nach Anspruch 9,
dadurch gekennzeichnet, dass der Sammelbehälter (17) aus mindestens zwei Teilen besteht, die gelenkig miteinander verbunden sind.

11. Apparatur nach Anspruch 1,
dadurch gekennzeichnet, dass sie zwei getrennte Teile aufweist, d. h. : ein Handentnahmegerät (41), das ein Endstück (43) mit einem Behälter (44) aufweist, in den ein Träger (45) mit einem eingebauten Heizwiderstand eingeführt und elektrisch angeschlossen werden kann, und einen Dampfkollektor (46), der an eine Analysevorrichtung (51) gekoppelt werden kann, wobei dieser Dampfkollektor (46) einen rohrförmigen Körper (47) aufweist, der ein Volumen begrenzt, das auf der einen Seite durch einen Boden (48) geschlossen und auf der anderen Seite durch eine Öffnung (49) offen ist, auf die das Endstück (43) des Entnahmegerätes (41) aufgesetzt werden kann.

12. Apparatur nach Anspruch 11,
dadurch gekennzeichnet, dass der Träger eine Zunge (22) aufweist, die eine Schleife bildet und dass der Körper (47) des Dampfkollektors (46) eine Ansaugöffnung (54) die durch eine Verbindungsmuffe mit der Analysevorrichtung verbunden ist, und eine Lufteinlassöffnung (53) aufweist, die sich entgegengesetzt zur Ansaugöffnung (54) befindet, wobei diese beiden Öffnungen (53 und 54) sich in der Achse der Schleife befinden, wenn das Endstück (43) auf die Öffnung (49) des Körpers (47) dieses Kollektors aufgesetzt wird.
